# EUROPEAN PATENT SPECIFICATION

(11) **EP 1 314 385 B1**
(45) Date of publication and mention of the grant of the patent: **17.03.2004**
(21) Application number: 03003913.5
(22) Date of filing: 07.10.1998
(51) Int. Cl.: A47J 27/21

(54) **Improvements relating to electrically heated vessels**
Verbesserungen an elektrisch geheizten Kochgefässen
Améliorations apportées à des récipients chauffés électriquement

(30) Priority: 07.10.1997 GB 9721254; 18.12.1997 GB 9726977
(43) Date of publication of application: 28.05.2003
(62) Divisional of application: 98946570.3
(73) Proprietor: OTTER CONTROLS LIMITED, Buxton, Derbyshire SK17 6LA (GB)
(72) Inventor: O'Neill, Robert, Andrew, Buxton, Derbyshire SK17 9NQ (GB); Gaeta, Antonio, Martin, Buxton, Derbyshire SK17 9AN (GB); White, Ian, Geoffrey, Fairfield, Buxton Derbyshire SK17 7ER (GB); White, John Edwin, Buxton, Derbyshire SK17 9PF (GB); Wragg, Stephen John, High Peak, Derbyshire SK23 9ST (GB); Wright, Peter Hallam, Norton Green, Stoke-on-Trent ST6 8NW (GB); Lindstrom, John Jeffrey, Buxton, Derbyshire SK17 9AW (GB)
(74) Representative: Milhench, Howard Leslie

(56) References cited:
- EP-A- 0 574 310
- WO-A-96/18331
- GB-A- 2 291 325

## Description

### Field of the Invention

This invention concerns improvements relating to electrically heated vessels, particularly electrically powered water heating vessels such as kettles, hot water jugs, pots, pans, urns, laboratory equipment and the like.

### Background of the Invention

Electrically powered kettles and hot water jugs have traditionally employed a heating element in the form of a wire wound resistance heater which is mounted with insulation within a tubular metal sheath. Sheathed heating elements of this kind have commonly incorporated an element head plate to which the heating element proper is affixed, and the head plate has provided for the attachment of the heating element to and in the associated appliance, an opening commonly being provided in a wall of the appliance for this purpose.

Planar electrical heating elements are, however, known and have been used for many years as hot plates in coffee making machines. One such planar element consists of an aluminium plate having a sheathed heating element as abovementioned cast or clenched to its underside. Planar heating elements have also been proposed which comprise a resistance heating track formed upon an electrically insulating substrate by printing or by lithographic techniques; one such element comprises a stainless steel substrate which is coated on one side with glass or another electrically insulating material, the resistance heating track being formed on the surface of the glass and then a further electrically insulating layer being formed over the resistance heating track. The fitting of planar heating elements in water heating vessels has been considered to be advantageous, at least aesthetically, since the vessel interior is then free from an intrusive element.

Conventionally, techniques for fixing planar heating elements within a plastics bodied water heating vessel have required the vessel body to incorporate an internal flanged portion at the base of the vessel which seats the element mounting plate. The mounting plate can be secured, for example, by means of rivets such as described in US-A-3,308,225 or more preferably, where the element is to be replaceable, by means of an attachment ring of screwed studs as described in our British Patent Application No. 9614872.1. The liquid sealing between the element and the body is provided by a gasket seal which is compressed between the element and the flanged portion of the vessel wall by securing of the rivets or screwed studs.

A recent trend in jug design is to have the top of the vessel smaller in diameter than its bottom. This causes two problems regarding the assembly of the element to the vessel. Firstly, the element cannot be assembled from the top of the vessel, because the element is larger in diameter than the opening at the top of the vessel. Secondly, whereas previously the mould core, which forms the inside of the vessel, was withdrawn through the top of the vessel, it now has to be withdrawn from the base of the vessel. Accordingly, it is no longer possible to provide a conventional flanged portion at the base of the vessel during the moulding process as such a flanged portion would prevent withdrawal of the mould core. The alternative of welding a flange in place as a separate operation of the vessel forming procedure is disadvantageous because it requires expensive process machinery for the welding operation which substantially increases the production costs.

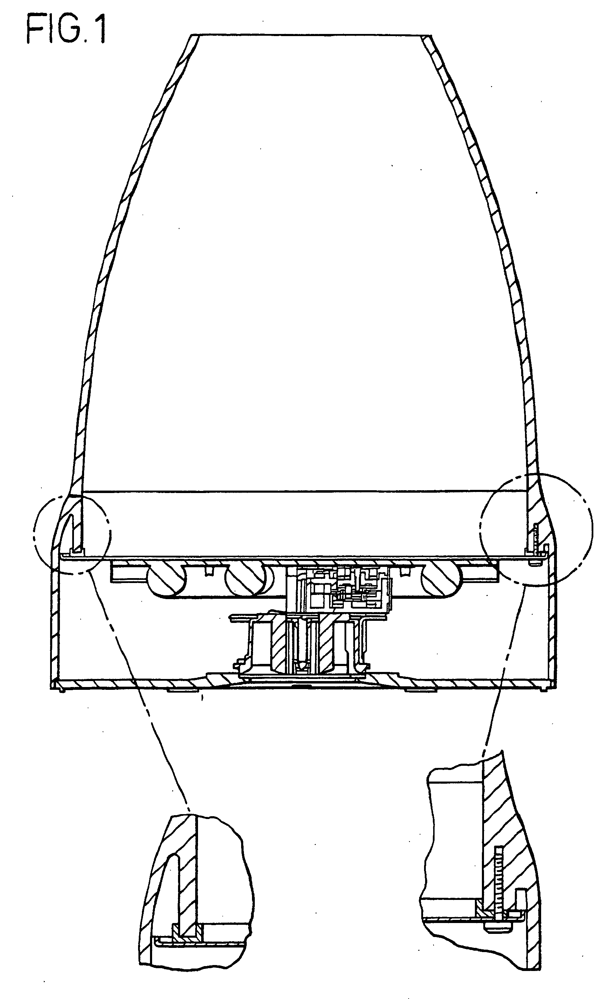

We have attempted to solve this problem by forming screw holes within the vessel wall, and securing the element to the vessel by screws passing through holes in the element mounting plate, as shown in Figure 1. However, in order to provide sufficient strength, either an excessive wall thickness is required leading to extra cost and moulding distortion or an unsightly bulge has to be formed on the outside of the vessel, which is also not ideal.

In WO-A-9618331 and CA-A-1202 659 there is described a technique for fixing a planar heating element mounting plate within a plastics bodied water heating vessel, the mounting plate having an upwardly facing channel formation into which a seal is placed and assembled with a downwardly projecting flange of the vessel body. The seal and the flange fit into the channel formation so that the formation is closed in a similar manner to that of an end of a tin can. Figure 2 of WO-A-9618331 and Figure 1 of CA-A-1 202 659 both show the need for thickening of the lower wall of the vessel to accommodate this type of assembly. It is in theory possible to use this type of assembly with the above described new types of tapered vessels and to make the wall thickening internal. However, the thickening required causes some distortion of the vessel exterior and the taper angle of the vessel body is required to be large enough to ensure that the thickened wall portion does not extend too far up the side of the vessel. A further disadvantage of this approach is that disassembly of the element from the vessel for repair or reclamation is not possible.

In GB-A-2 291 325 a further base mounting assembly is described which is used in the Millennium jug by Pifco Limited. This arrangement relies on an internal flange to which a planar element is clasped by deforming part of the flange around the underside element holding ring. This type of arrangement relies on an internal flange and is not suitable for the abovementioned new type of tapered vessels. Furthermore, disassembly of the element for repair or reclamation is not possible.

Other arrangements of background relevance to the invention are disclosed in European Patent Application No. 0574310 and International Patent Application No. WO 96/18331.

There are various other problems to be overcome in mounting a planar element to a plastics bodied vessel. For example: the vessel body will change diameter by around 1.5mm as the temperature of the water within the vessel rises from cold to boiling; the coefficient of expansion of stainless steel from which the element is usually made is considerably less than that of the vessel body moulding material, usually polypropylene, leading to a change of relative size as the vessel heats up; and the difficulty of maintaining a reasonable tolerance on the vessel body diameter, and indeed keeping it round. This latter problem can easily be underestimated by kettle manufacturers particularly where low cost appliances are being manufactured such as in the Far East.

### Objects and Summary of the Invention

Accordingly it is the principal object of the present invention to overcome or at least substantially reduce the abovementioned problems.

According to one aspect of the present invention, there is provided an electrically heated vessel comprising a vessel body for containing liquid that is to be heated and a planar heating element secured within the vessel body, characterized in that the planar heating element is secured within the vessel body with a resilient seal provided around the heating element and sealing the periphery thereof with respect to the vessel wall, the seal having one or more resilient circumferential fins extending outwardly and into contact with the internal wall surface of the vessel body.

The planar heating element may have a diameter substantially matching that of the vessel. Alternatively, the element may have a smaller diameter and an annular mounting flange may be affixed thereto, the combination of the element and the flange having an overall diameter matching that of the vessel.

The seal used with the element or the element/flange combination has one or more relatively thin resilient radially-extending circumferential fingers or fins which deform to take the shape of the vessel wall against which they are fitted and which absorb a wide range of size and shape variations of the vessel wall. Another advantage of the circumferential fitting of the above seal, is that the element is not in direct physical contact with the element locating formations. Rather, the element only contacts the seal directly. This reduces the risk of heat damage to the vessel walls from the element during, for example, dry boil.

When a seal is used with an annular mounting flange, the seal can conveniently be integral with the mounting flange, for example by being bonded thereto through formation of the seal and the mounting flange in a two-stage moulding process. The advantage of using such a seal is that the one or more fins absorb a wide range of size and shape variations of the vessel wall. In addition, the seal needs no other compression as an 'O' ring would, to make a watertight joint. Furthermore, the seal requires only minimal retention, since the expected applied pressure is very low, in the region of 250mm of water.

The seal may comprise an elastomeric thermally insulating material such as silicone rubber and may include a locating groove or other formation for reception and positive accommodation of a circumferential part of the element.

The above-described means of fixing an electric heating element into a vessel body is well adapted for fixing heating elements of the kind comprising a sheathed heating element affixed to the underside of a stainless steel plate, since the steel plate employed is generally of fairly thin gauge and can readily be formed at its periphery to provide a supportive seating for the resilient seal. The stainless steel utilized in such heating element constructions is commonly 0.5mm thick and formed of 18/8 type stainless steel. The same fixing means is not so well suited to thick film heating elements comprising a resistance heating track or layer formed on a stainless steel substrate with electrically insulating layers, commonly of glass, overlying and underlying the resistance heater, the reason for this being that the steel that is employed as the substrate in such heating elements has to be relatively thick in order to be capable of withstanding process temperatures without undue deformation. A thick film element plate is commonly in excess of 1.0mm thickness and formed of a less readily available ferritic type stainless steel and the extra diameter that would be required to form a supportive seating for a resilient seal represents undesirable added expense with little or no additional benefit.

To overcome or at least substantially reduce the abovementioned problem, the possibility exists as abovementioned to employ an annular mounting flange with the heating element as aforementioned.

Other preferred features of the present invention are set out in the independent claims.

The above and further features of the present invention are set forth with particularity in the appended claims and will become clearer by consideration of the following detailed description of exemplary embodiments of the present invention given with reference to the accompanying drawings.

### Brief Description of the Drawings

Figure 1 is a cross-sectional view of a planar heating element secured in a water heating vessel by means of a direct mounting arrangement which is not within the scope of the present invention;
Figure 2A is a partial cross-sectional view of a planar heating element secured in a water heating vessel in accordance with an embodiment of the present invention;
Figure 2B is an enlarged cross-sectional view of the sealing arrangements between the element and the walls of the appliance shown in Figure 2A;
Figure 3 is an exploded perspective view of the unassembled mounting and sealing arrangements of Figures 2A and 2B;
Figure 4 is an exploded perspective view of an unassembled planar heating element assembly in accordance with a second embodiment of the present invention;
Figures 5A and 5B show, respectively, a partial cross sectional view of the assembled planar heating element of Figure 4 and an enlarged cross-sectional view of the sealing arrangement shown in Figure 5A;
Figures 5C and 5D show, respectively, a partial cross-sectional view orthogonal to Figure 5A of the assembled arrangement shown in Figure 4 and a cross-sectional underside view of the appliance of Figure 5C; and
Figure 6A shows a perspective view of an integrated mounting flange and seal arrangement which could be employed in the second embodiment abovementioned, and Figure 6B is a partial cross sectional view of the arrangement of Figure 6A.

### Detailed Description of the Embodiments

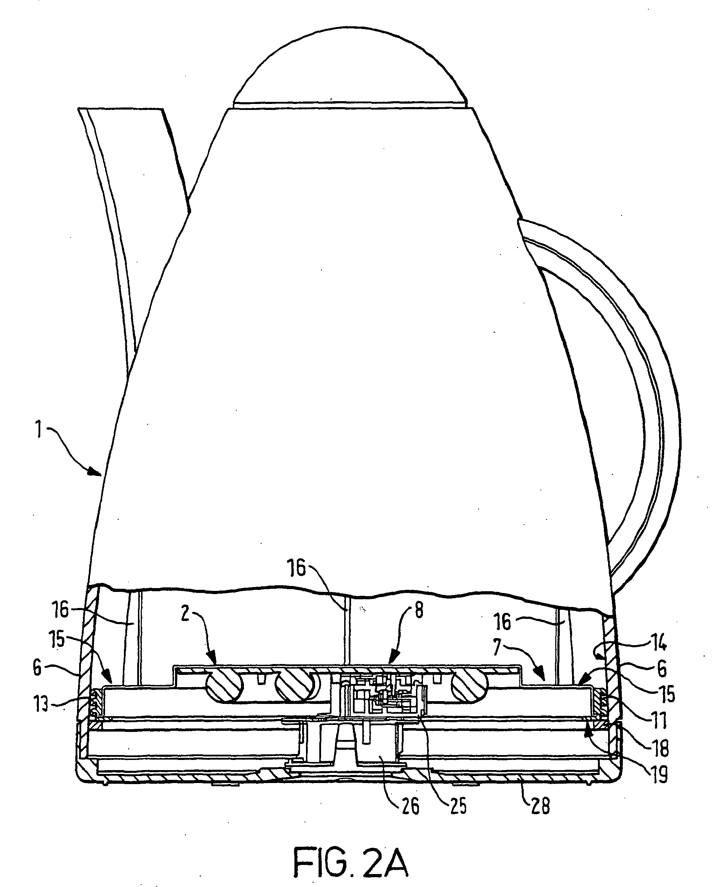

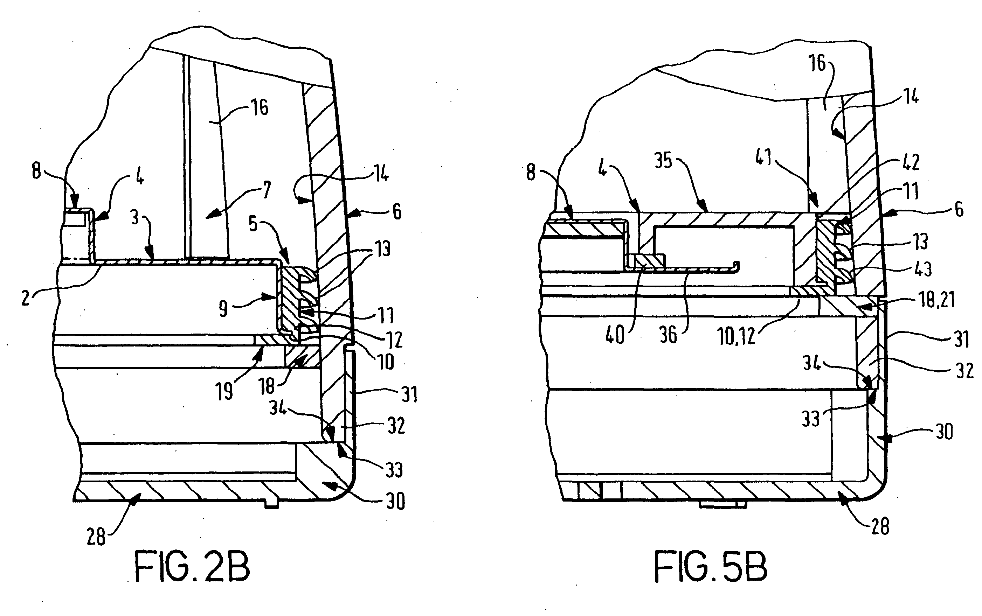

Referring to Figures 2A and 2B, there is shown a water heating vessel 1 and an arrangement for mounting and sealing a non-immersion type, underfloor planar heating element 2 to the vessel 1 of a first embodiment of the present invention. The vessel 1 is of the kind previously described, which has a smaller diameter at a top portion than at a bottom portion thereof. The vessel in question is the vessel part of a cordless electrical water heating appliance which also comprises a base unit (not shown) which, as is well known, serves to power the appliance from the mains electrical supply, there being co-operating electrical connectors provided on the vessel part and on the base unit which come together to power the vessel heating element 2 when the vessel part is properly seated on the base unit.

The planar heating element 2 is of the kind aforementioned which comprises an aluminium plate having a sheathed heating element proper cast or clenched to its undersurface. More particularly, the planar heating element 2 has a stepped formation 3 provided at its periphery which has an inner rim 4 and an outer rim 5. When the element 2 is assembled in the vessel 1, the inner rim 4 together with the walls 6 of the vessel 1 form a well 7 around the periphery of the heat generating central part 8 of the element 2. Under certain circumstances, the well 7 retains water and reduces the likelihood of heat generated by the element 2 damaging the plastics vessel moulding.

The outer rim 5 has a vertical face 9 and a short horizontal projection 10 at its end. A seal 11 which is made from a resilient rubber is provided around the perimeter of and against the vertical face 9 of the planar heating element 2. The inner diameter of the seal 11 is a close (stretched) fit around the outer rim 5 of the element 2 so as to retain the seal to the element 2 during assembly. The horizontal projection 10 is located in a complementary groove 12 of the seal 11 to further secure and correctly locate the seal 11.

The outer diameter of the seal 11 has three circurnferential fins 13 which, when assembled with the vessel 1, engage the inner sealing face 14 of the vessel wall 6. The fins 13 are thin enough to deform as the element 2 is assembled to the vessel 1, but stiff and resilient enough to follow the sealing face 14 of the vessel wall 6 during any subsequent movement caused, for example, by temperature change. The length of each fin 13 is sufficient to provide a sealing engagement over the full range of expected tolerance variations and thermal movement. For example, where the vessel 1 has a lower region diameter of 150mm, each fin 13 has a radial length of 3mm. A fin axial width of approximately 0.5 to 1.0mm provides sufficient stiffness and resilience for a rubber seal of between 40 and 60 Shore A hardness with 3 to 6 fins. Of course, even though the present embodiment has three fins 13, any number of fins 13 from a single fin 13 to a plurality could be provided. The dimensions of each fin 13 can be adjusted accordingly to provide the required sealing characteristics.

The vessel wall 6 in the region of the seal 11 is approximately 4mm in thickness, and is generally vertical, with a minimum draft angle. At a position level with the design location of the element upper face 15, six vertical radial fins 16 are moulded around the inner face 14 of the vessel wall 6. These radial fins 16 are of minimum thickness to be consistent with the mouldability of the vessel 1, and to avoid the possibility of sink marks, caused by uneven shrinking during cooling of the moulding, appearing on the outside of the vessel. The design of such features in plastics mouldings is well known, and the standard design rules to be followed to avoid the sharp changes of section which cause such sink marks need not be set out here because these are well known to the skilled person. The bottom faces 17 of these radial fins 16 form a support upto which the element 2 is pushed during assembly to the vessel 1, and form a temporary location for the element 2 while the base components are assembled.

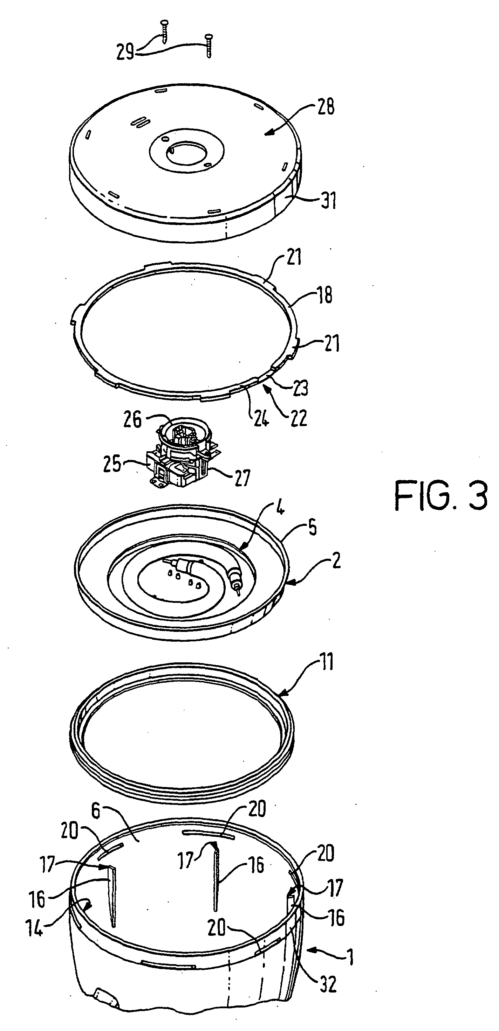

An internal circular clip 18, hereinafter referred to as a circlip, is placed against the bottom face 19 of the seal 11 to secure the element 2 and the seal 11 to the vessel 1 during assembly. Six circumferentially spaced moulded slots 20 are provided in the wall 6 of the vessel I at a position corresponding to that of the circlip 18 for securing the element 2 and the seal 11 to the vessel 1. The vertical disposition of the slots 20 in the vessel wall 6 is such as to provide a slight vertical compression of the seal 11 after fitting of the circlip 18. The moulded slots 20 are in line with the separation of the external mould components (not shown), and require no difficult or costly mould construction, such as sliding cores for their formation. The circlip 18 has six peripheral lugs 21 which, as the circlip 18 springs into place, locate in the moulded slots 20 thereby locking the circlip 18 to the vessel wall 6 and providing support for the element 2 and the seal 11. The circlip 18 and its accommodating slots 20 in the vessel wall 6 are best shown in Figure 3.

The circlip 18 is preferably a moulded plastics component, but could be a metal pressing, designed to combine resilience, to allow compression, with stiffness to ensure a secure fixing. The circlip 18 is generally circular and has a circumference/diameter reducing feature 22. The feature 22 is provided to allow the circlip 18 to be compressed so that the outer diameter of the circlip lugs 21 become smaller than the inner diameter of the vessel 1 in the region of the slots 20. This compression has to take place with the circlip 18 remaining flat, so that the lugs 21 are in the same plane and will enter the slots 20.

In its simplest form, the feature 22 may be a gap in the circlip 18. If this gap is too large, there will be a length of seal 11 which is not fully supported by the circlip 18, which may cause a problem. In the present embodiment, the circumference/diameter reducing feature 22 is provided by a break in the circlip 18 with overlapping sliding portions 23,24 at the break, in the manner of a split ring (see Figure 3). The overlapping parts 23,24 have a reduced thickness, to keep the cumulative thickness at the break the same as the rest of the circlip 18. This approach does not fully support the seal 11, but ensures that the seal 11 is always at least partially supported. The upper section 23 of the circlip 18 at the break is thinner than that of the lower section 24 and therefore the step in the section in the region of the break as seen by the seal is minimised. If the distance between the slots in the vessel wall 6 is too great, it is possible to stiffen the circlip 18, in a vertical direction, to prevent or minimise distortion due to the load imposed by the seal 11.

Figure 3 shows an exploded view of the mounting of the heating element 2 to the vessel 1 and shown attached to the central part of the underside of the element 2 is an element protector control 25 adapted to switch off the electrical supply to the heating element 2 in the event of the element temperature rising above a certain safe level; the element protector control 25 is an X-type control manufactured by us and is substantially as described in GB-A-2 283 156 with reference to Figure 1 thereof Also affixed to the underside of the heating element 2 is the vessel connector inlet part 26 of a cordless connection system substantially as described in WO-A- 9406158 with reference to Figures 7 to 11 thereof. The method of fixing the element protector control 25 and the connector inlet part 26 to each other and to the heating element 2 is described in our GB -A-2 307 602 and GB-A-2 306 801.

The element protector control 25 and the connector inlet part 26 are mounted to the element 2 and each other by a mounting bracket 27. The seal 11 is then secured around the outer rim 6 of the element 2 and this assembly is placed into the vessel 1 to be located against the bottom faces 17 of the radial fins 16. The circlip 18 is placed into the vessel 1 in a compressed condition and is released into the slots 20 to lock the assembly into the vessel 1. An appliance base moulding 28 is then secured to the mounting bracket 27 by way of mounting screws 29. Since the assembly is retained solely by the screws 29 held in the control and connector mounting bracket 27, the appliance is simple to disassemble for repair or for reclamation at the end of its life.

The base moulding 28 has, at an upper edge of its peripheral flange 30, a thin vertical projection 31. This projection 31 on assembly, covers the slots 20 in the vessel wall 6, to give a good cosmetic appearance. A lower part 32 of the vessel wall 6 is thinned to allow the base moulding 28 to fit in a flush manner as shown in Figures 2A and 2B. The upper edge 33 of the main (thickest) part of the base moulding peripheral flange 28 is arranged to sit against the lower edge 34 of the vessel wall 6. When screws 29 securing the base moulding 28 to the mounting bracket 27 are tightened, the element 2 is pulled down onto the circlip 18 thereby compressing the bottom face 19 of the seal 11 and pulling the circlip 18 down onto the bottom of the slots 20.

As the element 2 is pushed into the vessel 1, the fins 13 of the seal 11 adopt a downwardly sloping attitude. As the base moulding 28 is tightened to the mounting bracket 27, the element 2 is pulled downwards slightly. Because of friction and their downward slope, the fins 13 are unable to slide down with the movement of the element 2 and are thus forced firmly against the vessel wall 6. This movement enhances the security of the sealing arrangement.

The element 2 and the appliance base moulding 28 are securely clamped to the vessel 1 over the material of the vessel wall 6 below the slots 20. This is thus the only part of the design requiring reasonably close tolerances to control any visible cosmetic gaps between the base moulding 28 and the vessel 1. The element assembly is advantageously also securely located against the forces which might be expected during use of the appliance.

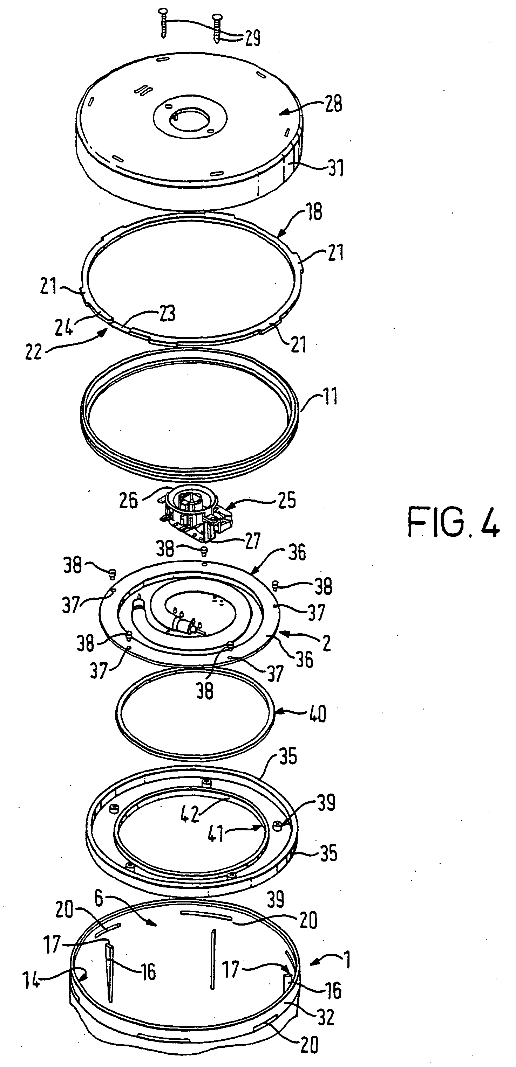

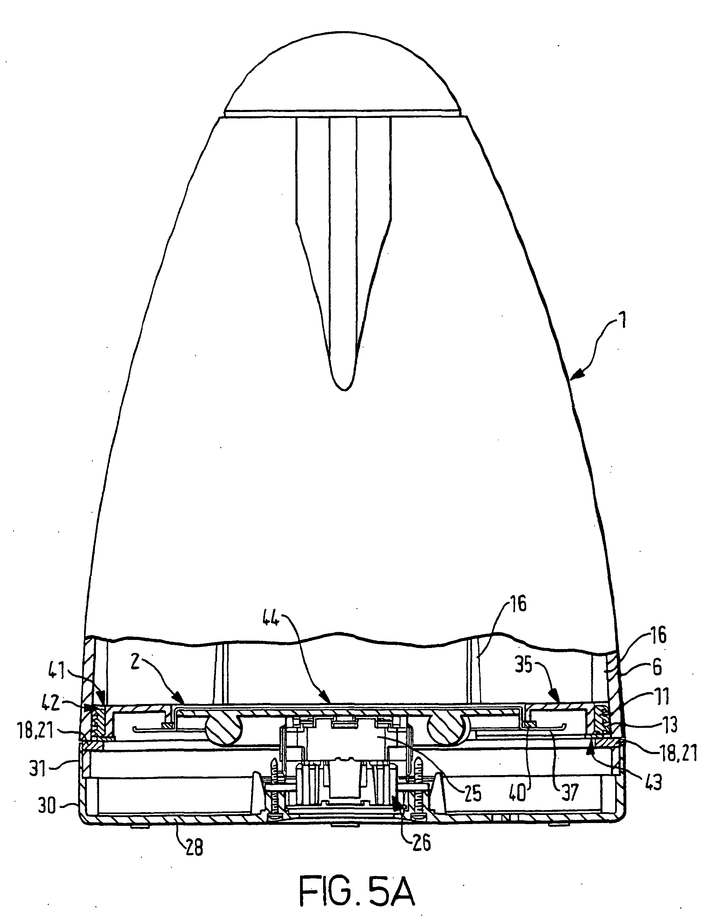

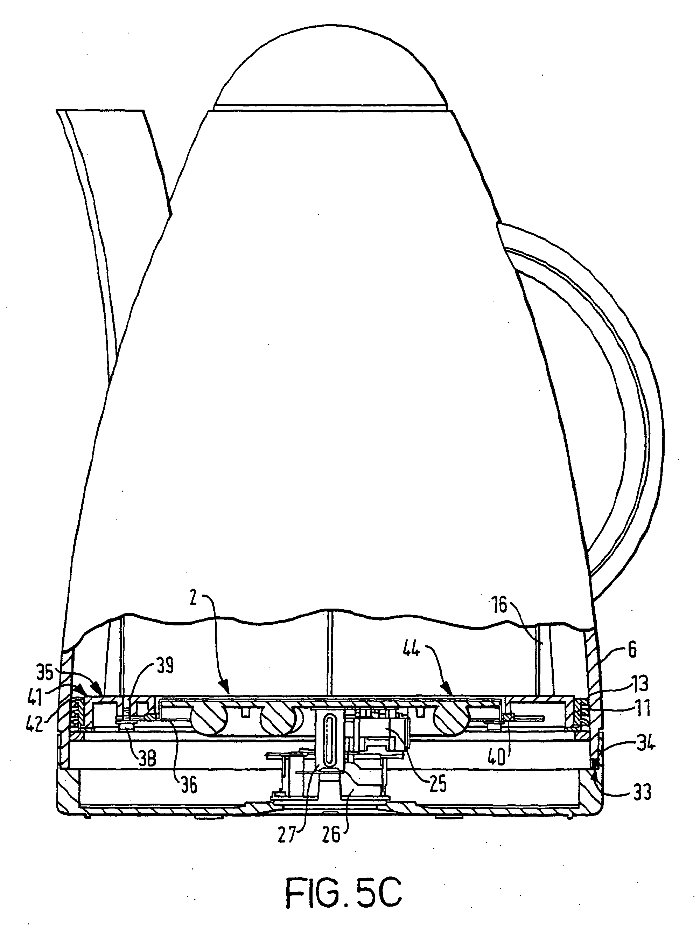

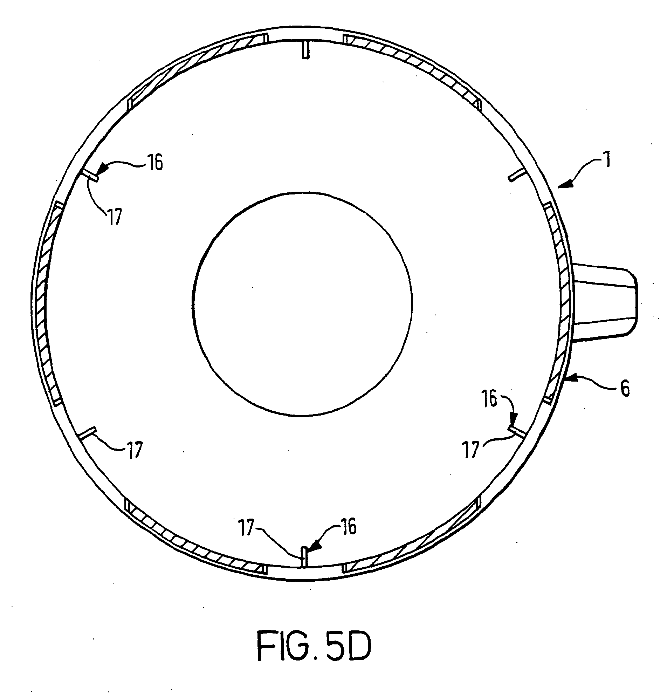

Referring now to Figures 4 and 5A to 5D, there are shown various views of a liquid heating vessel 1 and an arrangement for mounting and sealing a planar heating element 2 to the vessel 1 according to a second embodiment of the present invention. The second embodiment is similar in many aspects to the first embodiment and, to avoid unnecessary repetition, only the differences will be described hereinafter. The same reference numerals have been used in describing the same features found in both the first and second embodiments.

In the second embodiment, the planar heating element 2 is mounted to a mounting flange 35 in a similar manner to that described in British Patent Application No. 9614872.1. More particularly referring to Figure 4, the heating element 2 has a flange periphery 36 formed with holes 37 through which fixing screws 38 are passed and secured in corresponding mounting lugs 39 provided in the mounting flange 35. A gasket seal 40 is provided between the element 2 and the mounting flange 35 for sealing the mechanical joint between the same.

Referring now to Figures 5A to 5B where the assembled vessel of Figure 4 is shown, the heating element has a diameter which is smaller than that of the first embodiment element 2, the flange periphery 36 of the element 2 being of a sufficient size for securing the mounting flange 35 but not extending to the vessel wall 6 for direct mounting of the seal 11. Rather, the mounting flange 35 is secured in the well 7 around the element periphery 36 and has an outer rim 41 having a vertical face 42 and a horizontal projection 43 for securely locating the seal 11. The combination of the mounting flange 35 and the element 2 of the second embodiment have the same diameter as the element 2 of the first embodiment.

The second embodiment enables element manufacturers advantageously to produce an element of a fixed diameter which by use of an appropriately sized mounting flange 35, can be adapted to fit various sizes of vessel 1.

As is clearly shown in Figures 5A to 5C, the combination of the mounting flange 35 and the element 2, unlike the first embodiment, provide a completely planar internal base surface 44 to the vessel 1. This may be of greater aesthetic appeal to some customers than the stepped internal base surface of the vessel of the first embodiment. If the mounting flange 35 comprises a thermally insulating material, then the advantage of the well 7 of reducing the effect of heat generated by the element 2 at the vessel wall 6 can still be achieved.

The seal 11 and the mounting flange 25 could be formed integrally, for example by being moulded directly onto the periphery of the flange 35. The flexible seal 11 can either be mechanically joined to the rigid flange 35 by virtue of having moulded features which interlock therewith, or alternatively the seal 11 can be bonded to the flange 35. The rigid flange 35 may be moulded separately and loaded as an insert into the mould which produces the seal 11, or a more complex tool may be used which uses movable inserts to mould first one part and then the other. Alternatively both components could be moulded simultaneously. The moulding technique employed will depend upon the materials being used.

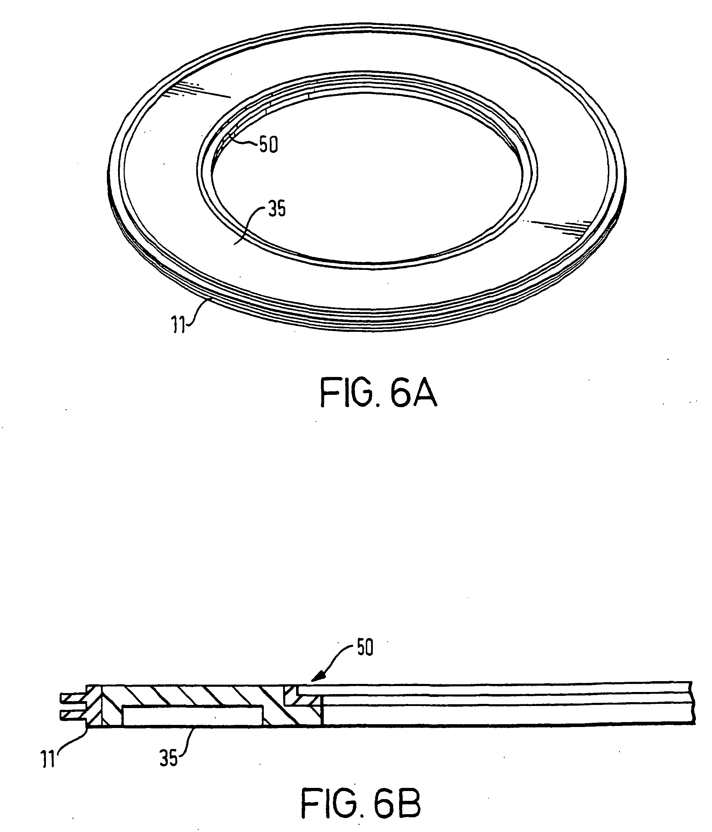

Referring now to Figure 6A, shown therein in perspective view is an integral mounting flange 35 and seal 11 as abovementioned, the arrangement further including an integral L-shaped seal 50 which serves as a seat for the heating element 2 (not shown). The heating element 2 could be dimensioned to make an interference fit with the L-shaped seal 50, more particularly with the upright part of the L-shaped seal 50, and will be pulled down onto the foot of the L-shaped seal to ensure seal integrity when the heating element 2 is mounted into the vessel. In the arrangement of Figures 6A and 6B, the seals 11 and 50 may be formed of an elastomeric material and the mounting flange 35 may be formed of a rigid thermoplastics material.

## Claims

1. An electrically heated vessel comprising a vessel body (1) for containing liquid that is to be heated and a planar heating element (2) secured within the vessel body, **characterized in that** the planar heating element (2) is secured within the vessel body (1) with a resilient seal (11) provided around the heating element (2) and sealing the periphery thereof with respect to the vessel wall (6), the seal (11) having one or more resilient circumferential fins (13) extending outwardly and into contact with the internal wall surface of the vessel body (1).

2. An electrically heated vessel as claimed in claim 1 wherein the seal (11) has a plurality of spaced-apart circumferential fins (13).

3. An electrically heated vessel as claimed in claim 1 or 2 wherein the heating element (2) has a planar portion (3) and a transverse peripheral flange portion (9), said flange portion (9) facing and being spaced apart from the internal wall surface of the vessel body (1) and the resilient seal (11) being assembled to said transverse flange portion (9) and sealing the space between the flange portion (9) and the internal wall surface of the vessel body (1).

4. An electrically heated vessel as claimed in claim 1 or 2 wherein the heating element (2) comprises a heating element proper secured within an annular mounting member (35) and the seal (11) is provided around the annular mounting member (35).

5. An electrically heated vessel as claimed in claim 4 wherein the annular mounting member (35) is formed of a rigid plastics material.

6. An electrically heated vessel as claimed in claim 5 wherein the resilient seal (11) is integral with the rigid plastics material mounting member (35).

7. An electrically heated vessel as claimed in claim 6 wherein the resilient seal (11) and the rigid plastics material mounting member (35) are made integral by virtue of being moulded together.

8. An electrically heated vessel as claimed in claim 6 wherein the resilient seal (11) and the rigid plastics material mounting member (35) are mechanically integrated.

9. An electrically heated vessel as claimed in any of the preceding claims wherein the heating element (2) is formed so as to define a peripheral sump (7).

10. An electrically heated vessel as claimed in any of the preceding claims wherein the heating element (2) comprises a metal plate having a resistance heating element secured to the undersurface thereof.

11. An electrically heated vessel as claimed in any of claims 1 to 9 wherein the heating element is a thick film heating element.

12. An electrically heated vessel as claimed in any of the preceding claims in the form of a cordless appliance comprising a vessel part and a base part, the vessel part comprising said vessel body (1) and having an electrical supply input connector (26) for supplying electricity to the heating element (2) when the vessel part is seated on the base part and the connector (26) on the vessel part is mated with a complementary electrical supply output connector provided in the base part.

## Patentansprüche

1. Elektrisch geheiztes Gefäß, umfassend einen Gefäßkörper (1) zum Enthalten einer Flüssigkeit, die erhitzt werden soll, und ein planes Heizelement (2), das in dem Gefäßkörper befestigt ist, **dadurch gekennzeichnet, dass** das plane Heizelement (2) innerhalb des Gefäßkörpers (1) mit einer elastischen Dichtung (11) befestigt ist, die um das Heizelement (2) vorgesehen ist und dessen Peripherie bezüglich der Gefäßwand (6) abdichtet, wobei die Dichtung (11) eine oder mehrere elastische, umfängliche Rippen (13) aufweist, die sich nach außen und in Kontakt mit der inneren Wandfläche des Gefäßkörpers erstrecken.

2. Elektrisch geheiztes Gefäß nach Anspruch 1, wobei die Dichtung (11) mehrere räumlich voneinander getrennte, umfängliche Rippen (13) aufweist.

3. Elektrisch geheiztes Gefäß nach einem der Ansprüche 1 oder 2, wobei das Heizelement (2) einen planen Abschnitt (3) und einen quer verlaufenden, peripheren Flanschabschnitt (9) aufweist, wobei der Flanschabschnitt (9) der inneren Wandfläche des Gefäßkörpers (1) zugekehrt und räumlich davon getrennt ist und die elastische Dichtung (11) an den quer verlaufenden Flanschabschnitt (9) angefügt ist und den Raum zwischen dem Flanschabschnitt (9) und der inneren Wandfläche des Gefäßkörpers (1) abdichtet.

4. Elektrisch geheiztes Gefäß nach einem der Ansprüche 1 oder 2, wobei das Heizelement (2) ein eigentliches Heizelement umfasst, das innerhalb eines ringförmigen Anbringungsglieds (35) befestigt ist, und die Dichtung (11) um das ringförmige Anbringungsglied (35) vorgesehen ist.

5. Elektrisch geheiztes Gefäß nach Anspruch 4, wobei das ringförmige Anbringungsglied (35) aus einem starren Kunststoffmaterial gebildet ist.

6. Elektrisch geheiztes Gefäß nach Anspruch 5, wobei die elastische Dichtung (11) mit dem Anbringungsglied (35) aus starrem Kunststoffmaterial einstückig ist.

7. Elektrisch geheiztes Gefäß nach Anspruch 6, wobei die elastische Dichtung (11) und das Anbringungsglied (35) aus starrem Kunststoffmaterial einstückig hergestellt sind, indem sie zusammengegossen sind.

8. Elektrisch geheiztes Gefäß nach Anspruch 6, wobei die elastische Dichtung (11) und das Anbringungsglied (35) aus starrem Kunststoffmaterial mechanisch einstückig sind.

9. Elektrisch geheiztes Gefäß nach einem der vorhergehenden Ansprüche, wobei das Heizelement (2) so ausgebildet ist, dass es eine periphere Wanne (7) definiert.

10. Elektrisch geheiztes Gefäß nach einem der vorhergehenden Ansprüche, wobei das Heizelement (2) eine Metallplatte mit einem Widerstandsheizelement umfasst, das an der Unterseite davon befestigt ist.

11. Elektrisch geheiztes Gefäß nach einem der Ansprüche 1 bis 9, wobei das Heizelement ein Dickfilmheizelement ist.

12. Elektrisch geheiztes Gefäß nach einem der vorhergehenden Ansprüche in Form einer schnurlosen Vorrichtung, umfassend ein Gefäßteil und ein Aufsatzteil, wobei das Gefäßteil den Gefäßkörper (1) umfasst und einen Eingangsstecker (26) für elektrische Versorgung zum Zuführen von Elektrizität zum Heizelement (2) aufweist, wenn das Gefäßteil auf dem Aufsatzteil sitzt, und der Stecker (26) am Gefäßteil mit einem ergänzenden Ausgangsstecker für elektrische Versorgung zusammenpasst, der im Aufsatzteil vorgesehen ist.

## Revendications

1. Récipient chauffé électriquement comprenant un corps de récipient (1) destiné à contenir un liquide à chauffer et un élément chauffant plan (2) fixé à l'intérieur du corps de récipient, **caractérisée en ce que** l'élément chauffant plan (2) est fixé à l'intérieur du corps de récipient (1) à l'aide d'un joint élastique (11) disposé autour de l'élément chauffant (2) et faisant étanchéité entre sa périphérie et la paroi (6) du récipient, le joint (11) comportant une ou plusieurs ailettes élastiques circonférentielles (13) qui s'étendent vers l'extérieur et en contact avec la paroi interne du corps de récipient (1).

2. Récipient chauffé électriquement selon la revendication 1, dans lequel le joint (11) comporte une pluralité d'ailettes circonférentielles espacées (13).

3. Récipient chauffé électriquement selon la revendication 1 ou 2, dans lequel l'élément chauffant (2) comprend une partie plane (3) et une partie de rebord périphérique transversal (9), ladite partie de rebord (9) faisant face et étant espacée de la surface de paroi interne du corps de récipient (1), et le joint élastique (11) étant assemblé à ladite partie de rebord transversal (9) et obturant l'espace séparant la partie de rebord (9) et la surface de paroi interne du corps de récipient (1).

4. Récipient chauffé électriquement selon la revendication 1 ou 2, dans lequel l'élément chauffant (2) comprend un élément chauffant fixé de façon appropriée dans un élément annulaire (35) de montage (1) et le joint (11) est disposé autour de l'élément annulaire (35) de montage.

5. Récipient chauffé électriquement selon la revendication 4, dans lequel l'élément annulaire (35) de montage est formé d'une matière plastique rigide.

6. Récipient chauffé électriquement selon la revendication 5, dans lequel le joint élastique (11) est intégré avec l'élément (35) de montage en matière plastique rigide.

7. Récipient chauffé électriquement selon la revendication 6, dans lequel le joint élastique (11) et l'élément (35) de montage en matière plastique rigide sont intégrés grâce au fait qu'ils sont moulés conjointement.

8. Récipient chauffé électriquement selon la revendication 6, dans lequel le joint élastique (11) et l'élément (35) de montage en matière plastique rigide sont intégrés mécaniquement.

9. Récipient chauffé électriquement selon l'une quelconque des revendications précédentes, dans lequel l'élément chauffant (2) est formé de manière à définir un une cuvette périphérique (7).

10. Récipient chauffé électriquement selon l'une quelconque des revendications précédentes, dans lequel l'élément chauffant (2) comprend une plaque métallique comportant un élément chauffant, à résistance électrique, fixé à sa surface inférieure.

11. Récipient chauffé électriquement selon l'une quelconque des revendications 1 à 9, dans lequel l'élément chauffant est un élément chauffant en couche épaisse.

12. Récipient chauffé électriquement selon l'une quelconque des revendications précédentes, sous forme d'un appareil sans fil, qui comprend une partie formant récipient et une partie formant base, la partie formant récipient comprenant ledit corps de récipient (1) et comportant un connecteur (26) d'entrée d'alimentation électrique, destiné à fournir de l'électricité à l'élément chauffant (2) quand la partie formant récipient repose sur la partie formant base, et le connecteur (26) situé sur la partie formant récipient est accouplé avec un connecteur complémentaire de sortie d'alimentation électrique, disposé dans la partie formant base.
